# EUROPÄISCHE PATENTSCHRIFT

(11) **EP 2 726 334 B1**
(45) Veröffentlichungstag und Bekanntmachung des Hinweises auf die Patenterteilung: **12.07.2017**
(21) Anmeldenummer: 12722734.6
(22) Anmeldetag: 21.05.2012
(51) Int. Cl.: B60S 1/38

(54) **WISCHBLATTVORRICHTUNG**
WIPER BLADE DEVICE
DISPOSITIF BALAI D'ESSUIE-GLACE

(30) Priorität: 28.06.2011 DE 102011078172
(43) Veröffentlichungstag der Anmeldung: 07.05.2014
(73) Patentinhaber: Robert Bosch GmbH, 70442 Stuttgart (DE)
(72) Erfinder: DEPONDT, Helmut, B-3010 Kessel-Lo (BE); BEX, Koen, B-3890 Jeuk/Limburg Belgien (BE); HERINCKX, Dirk, B-3350 Dries-Linter (BE)
(86) Internationale Anmeldenummer: PCT/EP2012/059355
(87) Internationale Veröffentlichungsnummer: WO 2013/000624

(56) Entgegenhaltungen:
- EP-A2- 2 123 524
- EP-A2- 2 127 969
- US-A1- 2008 235 896

## Beschreibung

### Stand der Technik

Die Erfindung geht aus von einer Wischblattvorrichtung nach dem Oberbegriff des Patentanspruchs 1.

Es ist bereits eine Wischblattvorrichtung eines Wischblatts zur Verwendung an einem Kraftfahrzeug bekannt, welche eine Federleiste, einen Wischleistenträger und zwei Endabschlusseinheiten umfasst. An zwei Enden der Federleiste und des Wischleistenträgers sind die Endabschlusseinheiten angeordnet.

Aus der US 2008/235896 A1 ist weiterhin eine Wischblattvorrichtung mit einer Federleiste, einem Wischleistenträger und einer Endabschlusseinheit bekannt, wobei die Endabschlusseinheit zur Befestigung der Federleiste zwei Rastelemente umfasst.

### Offenbarung der Erfindung

Die Erfindung geht aus von einer Wischblattvorrichtung mit zumindest einer Federleiste, wenigstens einem Wischleistenträger und zumindest einer Endabschlusseinheit.

Es wird vorgeschlagen, dass die Endabschlusseinheit zur Befestigung der Federleiste und/oder des Wischleistenträgers wenigstens zwei Rastelemente umfasst.

Hierbei soll unter einer "Federleiste" insbesondere ein Bauelement verstanden werden, welches zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und welches insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion
des Elements auf eine Ebene verstanden werden. Bevorzugt ist die Federleiste einstückig ausgebildet. Unter "einstückig" soll insbesondere stoffschlüssig verbunden, wie beispielsweise durch einen Schweißprozess und/oder einen Klebeprozess usw., und besonders vorteilhaft angeformt verstanden werden, wie durch die Herstellung aus einem Guss und/oder durch die Herstellung in einem Ein- oder Mehrkomponentenspritzgussverfahren. Vorzugsweise ist die Federleiste länglich ausgebildet. Vorzugsweise besteht die Federleiste zumindest teilweise aus Federstahl. Vorzugsweise weist die Federleiste in einem unbelasteten Zustand im Wesentlichen eine Form eines gebogenen Stabs und besonders vorteilhaft eines abgeflachten gebogenen Stabs auf. Besonders vorteilhaft ist eine Krümmung der Federleiste entlang einer Längserstreckung in einem unbelasteten Zustand größer als eine Krümmung einer Fahrzeugoberfläche eines Kraftfahrzeugs, insbesondere einer Fahrzeugscheibe, über die die Federleiste in wenigstens einem Betriebszustand geführt wird. Vorzugsweise weist die Federleiste ein Rastelement, insbesondere eine Ausnehmung, auf, die mit zumindest einem der Rastelemente der Endabschlusseinheit in einem montierten Zustand in Wirkverbindung steht. Unter einer "Ausnehmung" soll hier und im Folgenden insbesondere eine Materialausnehmung in einem Bauteil verstanden werden, welche sich insbesondere von einer ersten Oberfläche des Bauteils zu einer gegenüberliegenden zweiten Oberfläche des Bauteils erstreckt.

Unter einem "Wischleistenträger" soll insbesondere eine Einheit verstanden werden, die dazu vorgesehen ist, eine Wischleiste an der Federleiste zu befestigen. Unter "vorgesehen" soll insbesondere speziell ausgelegt und/oder ausgestattet verstanden werden. Unter einer "Wischleiste" soll insbesondere eine Einheit verstanden werden, welche eine Wischlippe und einen Haltebereich zur Halterung der Wischlippe an dem Wischleistenträger aufweist. Unter einer "Wischlippe" soll in diesem Zusammenhang ein Element verstanden werden, welches in einem Betrieb der Wischblattvorrichtung über die Fahrzeugoberfläche, insbesondere die Fahrzeugscheibe, bewegt wird, diese vorzugsweise während einer gesamten Bewegung berührt und besonders vorteilhaft möglichst gleichmäßig an die Fahrzeugoberfläche gepresst wird, insbesondere durch die Federleiste. Vorzugsweise ist die Wischlippe einstückig ausgestaltet und besteht vorzugsweise aus einem Naturkautschuk und besonders vorteilhaft aus einem synthetischen Kautschuk. Vorzugsweise unterscheidet sich der Wischleistenträger von einer Federleiste und ist als separates Bauteil ausgebildet. Vorzugsweise besteht der Wischleistenträger zumindest teilweise aus Gummi und/oder aus einem wenigstens teilelastischen Kunststoff. Vorzugsweise umfasst der Wischleistenträger einen Aufnahmebereich zur Aufnahme und Befestigung des Haltebereichs der Wischleiste. Vorzugsweise umfasst der Wischleistenträger zusätzlich einen Aufnahmebereich zur Halterung einer Windleiteinheit. Unter einer "Windleiteinheit" soll in diesem Zusammenhang insbesondere eine Einheit verstanden werden, die dazu vorgesehen ist, einen auf die Wischblattvorrichtung wirkenden Fahrtwind abzuweisen und/oder für ein Anpressen der Wischlippe auf die Fahrzeugoberfläche zu nutzen. Vorzugsweise besteht die Windleiteinheit zumindest teilweise aus Gummi und/oder aus einem wenigstens teilelastischen Kunststoff.

Unter einer "Endabschlusseinheit" soll insbesondere eine Einheit verstanden werden, die dazu vorgesehen ist, an einem Ende der Federleiste befestigt zu werden. Die Endabschlusseinheit ist insbesondere dazu vorgesehen, in einem montierten Zustand einen Endabschluss eines die Wischblattvorrichtung umfassenden Wischblatts bereitzustellen. Vorzugsweise ist die Endabschlusseinheit zumindest teilweise aus einem Kunststoff gebildet. Vorzugsweise ist die Endabschlusseinheit als eine Endkappe ausgebildet, die insbesondere in wenigstens einem montierten Zustand einen Teil der Federleiste umgreift. Vorzugsweise umfasst die Wischblattvorrichtung genau zwei Endabschlusseinheiten, jeweils eine für jedes Ende der Federleiste. Unter einem "Rastelement" soll insbesondere ein Element verstanden werden, welches dazu vorgesehen ist, in einem Zusammenwirken mit einem weiteren Rastelement eine Rastverbindung herzustellen. Vorzugsweise ist zumindest eines der Rastelemente als Rasthaken ausgeführt, welcher insbesondere einen Teilbereich aufweist, der bei einem Rastvorgang in eine zu der Federleiste senkrechte Richtung bewegt wird und/oder eine Erstreckung in eine Richtung senkrecht zu der Federleiste verändert. Unter einer Richtung "senkrecht zu der Federleiste" soll in diesem Zusammenhang insbesondere eine Richtung senkrecht zu einer Längserstreckung der Federleiste verstanden werden.

Durch eine solche Ausgestaltung kann eine vorteilhaft stabile Halterung der Endabschlusseinheit erreicht werden. So kann insbesondere eine weitgehend wackelfreie Befestigung der Endabschlusseinheit an der Federleiste und/oder dem Wischleistenträger bereitgestellt werden. Erfindungsgemäß wird vorgeschlagen, dass die Federleiste und der Wischleistenträger mittels der Rastelemente an der Endabschlusseinheit fixiert sind. Darunter, dass "die Federleiste und der Wischleistenträger mittels der Rastelemente an der Endabschlusseinheit fixiert sind", soll in diesem Zusammenhang insbesondere verstanden werden, dass lediglich eine Montage der Federleiste und des Wischleistenträgers an der Endabschlusseinheit mittels der Rastelemente ausreicht, um die drei Bauteile fest miteinander zu verbinden. Insbesondere kann eine Verwendung weiterer Bauteile zur Befestigung der Federleiste und des Wischleistenträgers an der Endabschlusseinheit ausgeschlossen werden. Dabei kann insbesondere die Federleiste über den Wischleistenträger oder auch der Wischleistenträger über die Federleiste an der Endabschlusseinheit fixiert sein. Ferner können die Federleiste und der Wischleistenträger jeweils für sich allein genommen direkt an der Endabschlusseinheit befestigt sein. Hierdurch kann eine vorteilhaft einfache Montage ermöglicht werden. Des Weiteren kann eine Anzahl von Bauteilen reduziert werden.

Vorteilhaft sind die Rastelemente an der Endabschlusseinheit angeformt. Vorzugsweise ist die Endabschlusseinheit zusammen mit den Rastelementen aus einem Guss hergestellt. Hierdurch kann eine vorteilhaft einfache Herstellung der Endabschlusseinheit zusammen mit den Rastelementen ermöglicht werden.

Ferner wird vorgeschlagen, dass zumindest ein Rastelement in wenigstens einem Seitenbereich der Endabschlusseinheit angeordnet ist. Unter einem "Seitenbereich der Endabschlusseinheit" soll insbesondere ein räumlicher Bereich der Endabschlusseinheit verstanden werden, dessen Haupterstreckungsebene in einem montierten Zustand zumindest im Wesentlichen senkrecht zu der Federleiste und insbesondere neben der Federleiste angeordnet ist. Unter einer Richtung, welche "zumindest im Wesentlichen senkrecht" zu einer Referenzrichtung ist, soll hier insbesondere eine Richtung verstanden werden, welche mit der Referenzrichtung einen Winkel zwischen 80° und 100°, insbesondere zwischen 85° und 95° und vorzugsweise von genau 90° aufweist. Darunter, dass ein räumlicher Bereich "neben der Federleiste" angeordnet ist, soll in diesem Zusammenhang insbesondere verstanden werden, dass eine unendliche Verlängerung der Federleiste in Richtung einer Krümmungsachse den räumlichen Bereich schneidet. Unter einer "Krümmungsachse" der Federleiste soll insbesondere eine Achse verstanden werden, die auf jeder beliebigen Flächennormalen einer größten glatten Oberfläche der Federleiste senkrecht steht. Vorzugsweise sind zwei Rastelemente jeweils an gegenüberliegenden Seitenbereichen, insbesondere an gegenüberliegenden Seitenwänden, der Endabschlusseinheit angeordnet. Hierdurch kann vorteilhaft eine weitgehend wackelfreie Befestigung der Federschiene und/oder des Wischleistenträgers an der Endabschlusseinheit erreicht werden.

Wenn zumindest eines der Rastelemente als Rasthaken ausgebildet ist, kann eine vorteilhaft einfache Konstruktion ermöglicht werden, da lediglich einfache Rastelemente, vorzugsweise Ausnehmungen, an der Federschiene und/oder am Wischleistenträger vorgesehen sein können.

In einer weiteren Ausgestaltung der Erfindung wird vorgeschlagen, dass die Endabschlusseinheit zur Erhöhung einer Flexibilität der Rasthaken wenigstens eine Ausnehmung aufweist. Vorzugsweise ist die Ausnehmung als ein seitlicher Einschnitt, insbesondere als ein schlitzförmiger Einschnitt ausgeführt, vorzugsweise in einem Seitenbereich der Endabschlusseinheit. Hierdurch kann ein Teilbereich der Endabschlusseinheit, insbesondere ein Seitenteilbereich, als Rastelement dienen, wodurch eine vorteilhaft einfache und kostengünstige Konstruktion erreicht werden kann.

Wenn die Endabschlusseinheit einen Aufnahmebereich für die Wischleiste aufweist, der einen am Wischleistenträger angeordneten Aufnahmebereich für die Wischleiste in einem montierten Zustand fortsetzt, kann eine besonders sichere Halterung, insbesondere in einem Endbereich der Wischleiste erreicht werden.

Ferner wird vorgeschlagen, dass der Wischleistenträger wenigstens ein Rastelement zur Befestigung der Endabschlusseinheit aufweist. Vorzugsweise ist das Rastelement des Wischleistenträgers als eine Ausnehmung, insbesondere als eine seitliche Ausnehmung ausgebildet, die insbesondere mit dem als Rasthaken ausgebildeten Rastelement der Endabschlusseinheit zusammenwirkt. Hierdurch kann eine Konstruktion des Wischleistenträgers vorteilhaft vereinfacht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibungen und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt mit einer Wischblattvorrichtung in einer schematischen Darstellung,
- Fig. 2: die Wischblattvorrichtung aus Fig. 1 in einer Schnittdarstellung entlang einer Linie II-II in Fig. 1,
- Fig. 3: eine Endabschlusseinheit der Wischblattvorrichtung aus Fig. 1 in einer Schnittdarstellung,
- Fig. 4: die Endabschlusseinheit und eine Federleiste der Wischblattvorrichtung aus Fig. 1 in einer Schnittdarstellung,
- Fig. 5: die Endabschlusseinheit und die Federleiste der Wischblattvorrichtung aus Fig. 1 in einer weiteren Schnittdarstellung,
- Fig. 6: die Federleiste der Wischblattvorrichtung aus Fig. 1 in einer Draufsicht,
- Fig. 7: die Endabschlusseinheit und einen Wischleistenträger der Wischblattvorrichtung aus Fig. 1 in einer Draufsicht von unten,
- Fig. 8: den Wischleistenträger der Wischblattvorrichtung aus Fig. 1 in einer Draufsicht,
- Fig. 9: die Wischblattvorrichtung aus Fig. 1 in einer Schnittdarstellung entlang einer Linie IX-IX in Fig. 2,
- Fig. 10: eine weitere Wischblattvorrichtung in einer Schnittdarstellung,
- Fig. 11: eine Endabschlusseinheit, eine Federleiste und einen Wischleistenträger der Wischblattvorrichtung aus Fig. 10 in einer isometrischen Schnittdarstellung,
- Fig. 12: den Wischleistenträger der Wischblattvorrichtung aus Fig. 10 in einer Draufsicht,
- Fig. 13: die Federleiste und den Wischleistenträger der Wischblattvorrichtung aus Fig. 10 in einem unmontierten Zustand in einer Schnittdarstellung,
- Fig. 14: die Wischblattvorrichtung aus Fig. 10 in einer Schnittdarstellung entlang einer Linie XIV-XIV in Fig. 10,
- Fig. 15: eine weitere Wischblattvorrichtung in einer Schnittdarstellung,
- Fig. 16: eine Endabschlusseinheit der Wischblattvorrichtung aus Fig. 15 in einer Schnittdarstellung,
- Fig. 17: die Endabschlusseinheit und eine Federleiste der Wischblattvorrichtung aus Fig. 15 in einer isometrischen Darstellung von unten,
- Fig. 18: die Endabschlusseinheit, die Federleiste und einen Wischleistenträger der Wischblattvorrichtung aus Fig. 15 in einer isometrischen Darstellung von unten,
- Fig. 19: den Wischleistenträger der Wischblattvorrichtung aus Fig. 15 in einer Draufsicht,
- Fig. 20: die Wischblattvorrichtung aus Fig. 15 in einer Schnittdarstellung entlang einer Linie XX-XX in Fig. 15,
- Fig. 21: eine Endabschlusseinheit und eine Federleiste einer weiteren Wischblattvorrichtung in einer isometrischen Darstellung von unten,
- Fig. 22: die Endabschlusseinheit, die Federleiste und einen Wischleistenträger der Wischblattvorrichtung aus Fig. 21 in einer isometrischen Darstellung von unten,
- Fig. 23: die Federleiste der Wischblattvorrichtung aus Fig. 21 in einer Draufsicht,
- Fig. 24: den Wischleistenträger der Wischblattvorrichtung aus Fig. 21 in einer Draufsicht,
- Fig. 25: eine weitere Wischblattvorrichtung in einer Schnittdarstellung und
- Fig. 26: eine Endabschlusseinheit und eine Federleiste der Wischblattvorrichtung aus Fig. 25 in einer isometrischen Schnittdarstellung.

### Beschreibung der Ausführungsbeispiele

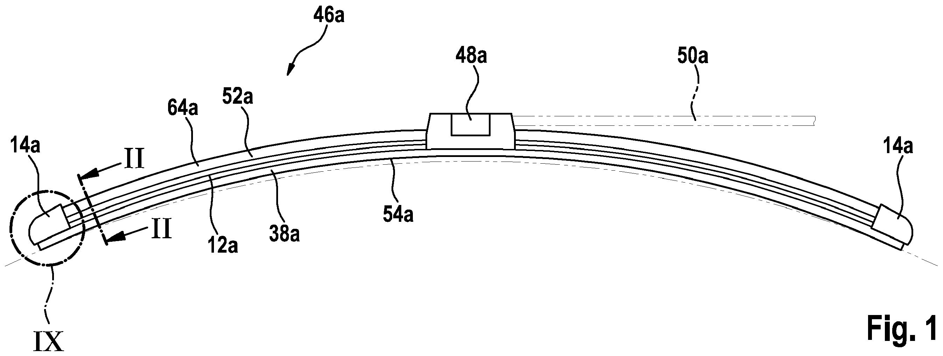

Figur 1 zeigt schematisch ein Wischblatt 46a mit einer erfindungsgemäßen Wischblattvorrichtung. Das Wischblatt 46a weist einen Adapter 48a auf, der zur Montage des Wischblatts 46a an einem gestrichelt eingezeichneten Wischarm 50a einer Scheibenwischeranlage eines Kraftfahrzeugs vorgesehen ist.

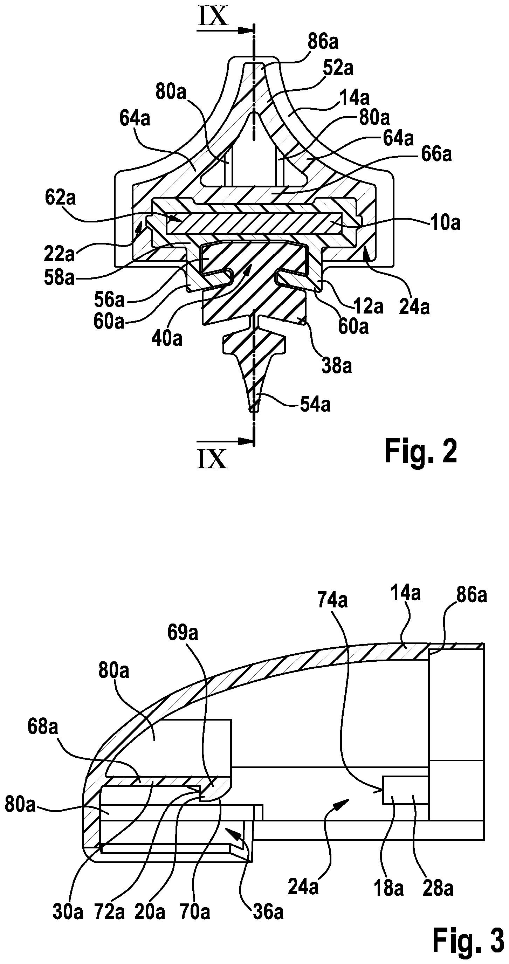

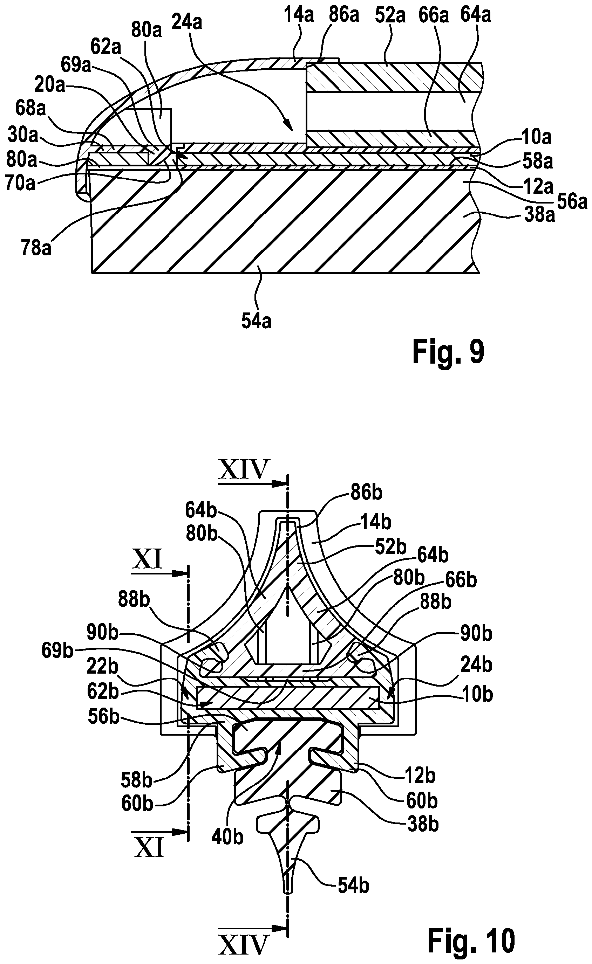

Figur 2 zeigt die Wischblattvorrichtung in einer Schnittdarstellung entlang einer Linie II-II in Fig. 1. Die Wischblattvorrichtung umfasst eine bandartig lang gestreckte und gekrümmte Federleiste 10a aus Federstahl. Ferner weist die Wischblattvorrichtung einen Wischleistenträger 12a aus einem elastischen Kunststoff, eine Wischleiste 38a aus einem synthetischen Kautschuk und eine Windleiteinheit 52a aus einem teilelastischen Kunststoff auf. Wie anhand von Fig. 1 erkennbar, sind der Wischleistenträger 12a, die Wischleiste 38a und die Windleiteinheit 52a länglich ausgeführt und sind in einem montierten Zustand parallel zur Federleiste 10a angeordnet. Die Federleiste 10a ist dazu vorgesehen, in einem Betrieb der Scheibenwischeranlage eine Wischlippe 54a der Wischleiste 38a weitgehend gleichmäßig gegen eine zu wischende Oberfläche zu drücken. Hierzu ist eine Krümmung der Federleiste 10a derart ausgebildet, dass sie in einem unbelasteten Zustand größer ist als eine größte, an der zu wischenden Oberfläche auftretende Krümmung. Der Wischleistenträger 12a ist dazu vorgesehen, die Wischleiste 38a fest mit der Federleiste 10a zu verbinden und beim Wischen auftretende Seitenkräfte von der Wischleiste 38a auf die Federleiste 10a zu übertragen. Die Windleiteinheit 52a sorgt für einen erhöhten Anpressdruck des Wischblatts 46a auf die Oberfläche und verhindert ein Abheben des Wischblatts 46a von der Oberfläche aufgrund eines Fahrtwinds bei schneller Fahrt des Kraftfahrzeugs. Das Wischblatt 46a wird an beiden Enden jeweils durch eine Endabschlusseinheit 14a der Wischblattvorrichtung abgeschlossen. Die als Endkappe ausgebildete Endabschlusseinheit 14a nimmt hierbei jeweils Endbereiche der Federleiste 10a, des Wischleistenträgers 12a und der Windleiteinheit 52a auf (vgl. Fig. 9).

Gemäß Fig. 2 weist der Wischleistenträger 12a im Querschnitt betrachtet zumindest im Wesentlichen eine rechteckförmige Gestalt auf, wobei an einer in einem montierten Zustand der Wischleiste 38a zugewandten Rechteckseite 58a eines Rechtecks ein Aufnahmebereich 40a für ein Trägerelement 56a der Wischleiste 38a angeordnet ist. Der Aufnahmebereich 40a ist durch zwei hakenartige Fortsätze 60a und die Rechteckseite 58a begrenzt. Das Rechteck umschließt einen Aufnahmebereich 62a für die Federleiste 10a. Die Windleiteinheit 52a hat im Querschnitt betrachtet zumindest im Wesentlichen eine Form eines gleichschenkligen Dreiecks (vgl. Fig. 2). Dreieckschenkel 64a des Dreiecks sind über eine Basisseite 66a des Dreiecks verlängert und umgreifen in einem montierten Zustand einen Randbereich des Wischleistenträgers 12a formschlüssig. Eine Oberfläche des Wischleistenträgers 12a ist in diesem Bereich an eine Oberfläche des Windleiteinheit 52a angepasst. Die Dreieckschenkel 64a weisen zur Verbesserung ihrer Windleiteigenschaften eine von außen betrachtet leicht konkave Krümmung auf.

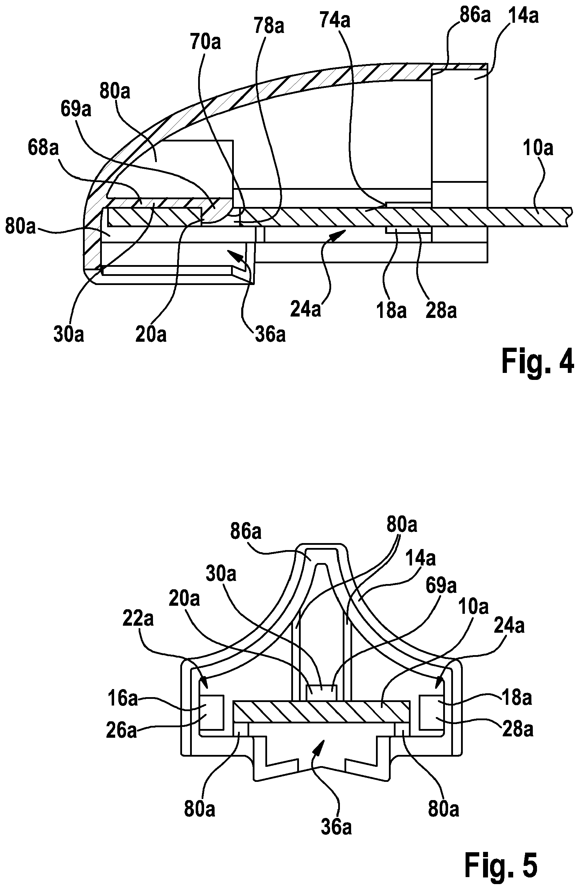

Figur 3 zeigt die Endabschlusseinheit 14a in einem unmontierten Zustand in einer seitlichen Schnittdarstellung. Die Endabschlusseinheit 14a besteht aus einem zumindest teilelastischen Kunststoff. Die Endabschlusseinheit 14a umfasst zur Befestigung der Federleiste 10a ein Rastelement 20a. Die Endabschlusseinheit 14a umfasst zur Befestigung des Wischleistenträgers 12a zusätzlich zwei weitere Rastelemente 16a, 18a (vgl. Fig. 5). Die Rastelemente 16a, 18a, 20a sind als Rasthaken 26a, 28a, 30a ausgebildet und einstückig an der Endabschlusseinheit 14a angeformt. Die Rastelemente 16a, 18a zur Befestigung des Wischleistenträgers 12a sind jeweils in einem Seitenbereich 22a, 24a der Endabschlusseinheit 14a angeordnet und zwar in einander gegenüberliegenden Seitenbereichen 22a, 24a der Endabschlusseinheit 14a. Sowohl die Federleiste 10a als auch der Wischleistenträger 12a sind durch die Rastelemente 16a, 18a, 20a unmittelbar an der Endabschlusseinheit 14a fixiert. Der Rasthaken 30a umfasst einen Federsteg 68a, der an einem ersten Ende an einer Stirnfläche der Endabschlusseinheit 14a angeformt ist und an einem zweiten Ende in einen Rastkörper 69a übergeht. Der Rastkörper 69a weist eine Auflaufschräge 70a auf. Auf einer von der Auflaufschräge 70a abgewandten Seite weist der Rastkörper 69a eine Rastfläche 72a auf. Die Rastfläche 72a weist eine Flächennormale auf, welche in einem montierten Zustand parallel zu einer Haupterstreckungsebene der Federleiste 10a in deren Endbereich liegt. Die seitlichen Rasthaken 26a, 28a sind als von einer Seitenwand der Endabschlusseinheit 14a abstehende Flügel ausgebildet. Die Rasthaken 26a, 28a weisen jeweils eine Rastfläche 74a, 76a auf.

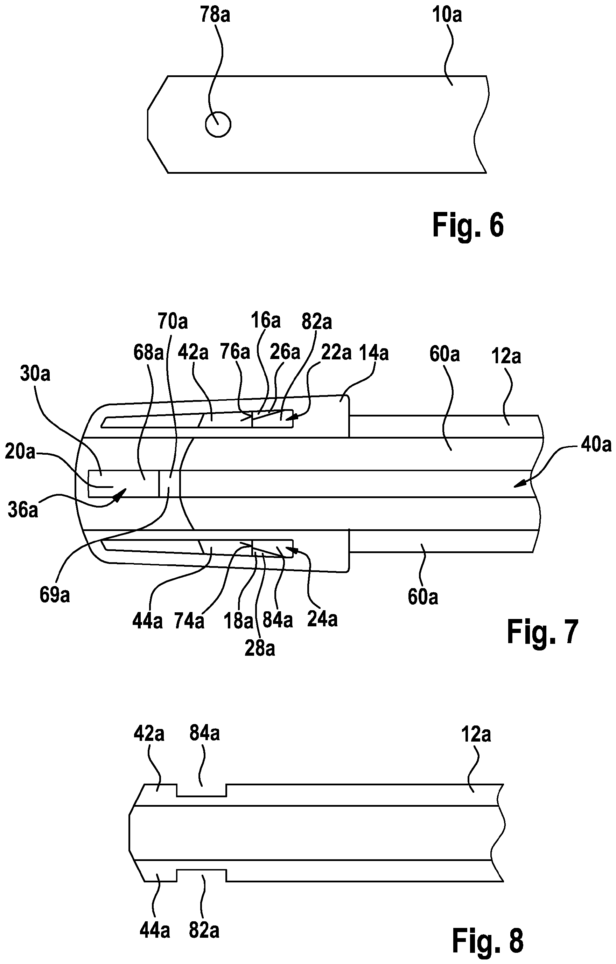

Figur 4 zeigt die Endabschlusseinheit 14a mit montierter Federleiste 10a in einer Schnittdarstellung, wobei in Fig. 4 einer besseren Übersichtlichkeit halber auf eine Darstellung des Wischleistenträgers 12a, der Wischleiste 38a und der Windleiteinheit 52a verzichtet wurde. Bei hergestellter Rastverbindung greift der Rasthaken 30a in eine Rastausnehmung 78a der Federleiste 10a ein (vgl. Fig. 6). Die Rastausnehmung 78a ist im vorliegenden Beispiel kreisrund ausgebildet. Bei einer Montage der Federleiste 10a an der Endabschlusseinheit 14a wird die Federleiste 10a entlang von Führungsleisten 80a der Endabschlusseinheit 14a eingeführt (vgl. Fig. 5). Durch die Auflaufschräge 70a wird der Rasthaken 30a bei Einführen der Federleiste 10a elastisch verformt und schnappt schließlich in die Rastausnehmung 78a ein, wenn die Rastausnehmung 78a der Federleiste 10a und der Rastkörper 69a übereinander angeordnet sind. Ein Herausziehen der Federleiste 10a aus der Endabschlusseinheit 14a ist bei hergestellter Rastverbindung verhindert, da die Rastfläche 72a des Rasthakens 30a mit einer korrespondierenden, die Rastausnehmung 78a begrenzenden Fläche der Federleiste 10a in Wirkverbindung steht (vgl. Fig. 4).

Figur 7 zeigt die Endabschlusseinheit 14a mit montiertem Wischleistenträger 12a in einer Draufsicht von unten, wobei einer besseren Übersicht halber auf eine Darstellung der Federleiste 10a, der Wischleiste 38a und der Windleiteinheit 52a verzichtet wurde. Der Wischleistenträger 12a umfasst zwei zu den zwei Rasthaken 26a, 28a korrespondierende Rastelemente 42a, 44a in Form zweier Rastausnehmungen 82a, 84a zur Befestigung der Endabschlusseinheit 14a. Die Rastausnehmungen 82a, 84a sind als seitliche Ausnehmungen im Wischleistenträger 12a ausgebildet (vgl. Fig. 8).

Durch die Rastausnehmungen 82a, 84a weicht ein Querschnitt des Wischleistenträgers 12a im Bereich der Ausnehmungen 82a, 84a von dem oben beschriebenen weitgehend rechteckigen Querschnitt ab. Durch die Rastausnehmungen 82a, 84a ist der Aufnahmebereich 62a für die Federleiste 10a seitlich offen. Beim Einführen des Wischleistenträgers 12a in die Endabschlusseinheit 14a werden die als Flügel ausgestalteten Rasthaken 26a, 28a durch den Wischleistenträger 12a elastisch verformt und legen sich an die Seitenwände der Endabschlusseinheit 14a an. Sobald die Rastausnehmungen 82a, 84a oberhalb der Rasthaken 26a, 28a angeordnet sind, kehren die Rasthaken 26a, 28a in ihre Grundstellung zurück. Bei hergestellter Rastverbindung liegen die Rastflächen 74a, 76a der Rasthaken 26a, 28a somit an korrespondierenden, die Rastausnehmungen 82a, 84a begrenzenden Flächen an und verhindern auf diese Weise ein Herausziehen des Wischleistenträgers 12a aus der Endabschlusseinheit 14a. Die Endabschlusseinheit 14a weist gemäß Fig. 7 einen Aufnahmebereich 36a für die Wischleiste 38a auf, welcher den am Wischleistenträger 12a angeordneten Aufnahmebereich 40a in einem montierten Zustand fortsetzt. Hierdurch kann insbesondere in einem Endbereich der Wischleiste 38a ein sicherer Halt der Wischleiste 38a erreicht werden.

Figur 9 zeigt die Wischblattvorrichtung in einer Schnittdarstellung entlang einer Linie IX-IX in Fig. 2. Eine Position der Windleiteinheit 52a parallel zur Federleiste 10a ist durch einen Anschlag der Windleiteinheit 52a gegen eine Anschlagskante 86a der Endabschlusseinheit 14a definiert. Die Endabschlusseinheit 14a ist in einem Innenbereich derart geformt, dass der Wischleistenträger 12a mit aufgesetzter Windleiteinheit 52a formschlüssig in die Endabschlusseinheit 14a passt (vgl. Fig. 2). Hierbei können insbesondere zusätzliche Abstandsstege zum Einsatz kommen, die insbesondere dazu vorgesehen sein können, Fertigungs- und/oder Montagetoleranzen auszugleichen.

In Fig. 10 bis 26 sind vier weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere Fig. 1 bis 9, verwiesen werden kann. Zur Unterscheidung der Ausführungsbeispiele ist der Buchstabe a in den Bezugszeichen des Ausführungsbeispiels in Fig. 1 bis 9 durch die Buchstaben b, c, d und e in den Bezugszeichen der Ausführungsbeispiele Fig. 10 bis 26 ersetzt. Bezüglich gleich bezeichneter Bauteile, insbesondere in Bezug auf Bauteile mit gleichen Bezugszeichen, kann grundsätzlich auch auf die Figuren und/oder die Beschreibungen der anderen Ausführungsbeispiele, insbesondere Fig. 1 bis 9, verwiesen werden.

Figur 10 zeigt eine weitere Wischblattvorrichtung. Ein Wischleistenträger 12b hat hier im Querschnitt betrachtet eine ähnliche Form wie im vorherigen Ausführungsbeispiel. Anstatt dass jedoch eine Windleiteinheit 52b den Wischleistenträger 12b zur Herstellung einer formschlüssigen Verbindung umgreift, sind hier an einer einer Rechteckseite 58b gegenüberliegenden Rechteckseite zwei Halteleisten 88b angeformt, die in korrespondierende Haltenuten 90b der Windleiteinheit 52b eingreifen. Die Windleiteinheit 52b hat im Querschnitt betrachtet zumindest im Wesentlichen eine Form eines gleichschenkligen Dreiecks. An jeweils einem einer Basisseite 66b zugewandten Ende von Dreieckschenkeln 64b sind die Haltenuten 90b angeformt.

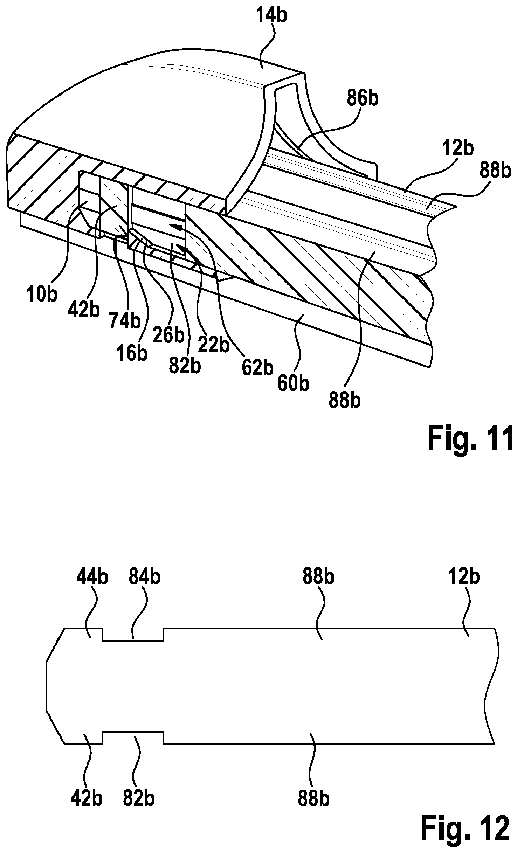

Figur 11 zeigt eine isometrische Schnittdarstellung einer Endabschlusseinheit 14b mit einer montierten Federleiste 10b und dem montierten Wischleistenträger 12b entlang einer Linie XI-XI in Fig. 10, wobei in Fig. 11 einer Übersichtlichkeit halber auf eine Darstellung der Windleiteinheit 52b und einer Wischleiste 38b verzichtet wurde. Die Endabschlusseinheit 14b weist zwei als Rasthaken 26b, 28b ausgebildete Rastelemente 16b, 18b auf, die jeweils in einem Seitenbereich 22b, 24b der Endabschlusseinheit 14b angeordnet sind. Die Rasthaken 26b, 28b sind an einem in einem montierten Zustand der Wischleiste 38b zugewandten Boden der Endabschlusseinheit 14b angeformt. Bei einer seitlichen Betrachtung des Bodens weisen die Rasthaken 26b, 28b eine massive, dreieckige Form auf. Die Rasthaken 26b, 28b umfassen eine Auflaufschräge und eine Rastfläche 74b, 76b auf einer von der Auflaufschräge abgewandten Seite der Rasthaken 26b, 28b. Der Wischleistenträger 12b weist wie im vorherigen Ausführungsbeispiel zwei seitliche, zu den Rasthaken 26b, 28b korrespondierende Rastausnehmungen 82b, 84b auf (vgl. Fig. 12). Bei einer Montage des Wischleistenträgers 12b an der Endabschlusseinheit 14b werden die Rasthaken 26b, 28b und auch Teile des Bodens durch ein Einschieben des Wischleistenträgers 12b elastisch verformt. Sobald die Rasthaken 26b, 28b über den Rastausnehmungen 82b, 84b angeordnet sind, kehren die Rasthaken 26b, 28b und der Boden in ihre Ausgangslage zurück. Bei hergestellter Rastverbindung liegen die Rastflächen 74b, 76b der Rasthaken 26b, 28b somit an korrespondierenden, die Rastausnehmungen 82b, 84b begrenzenden Flächen an und verhindern auf diese Weise ein Herausziehen des Wischleistenträgers 12b aus der Endabschlusseinheit 14b.

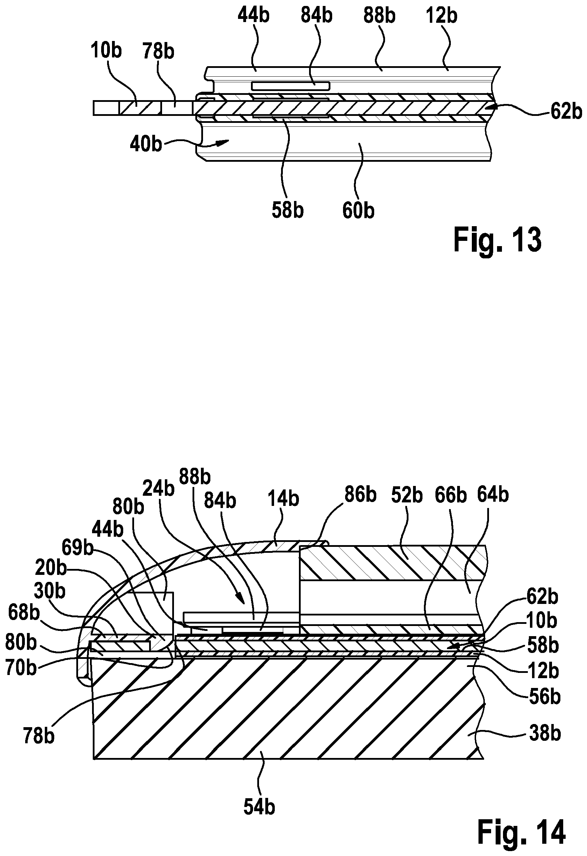

Figur 13 zeigt eine Schnittdarstellung des Wischleistenträgers 12b bei eingeschobener Federleiste 10b. Es ist deutlich erkennbar, wie ein Aufnahmebereich 62b für die Federleiste 10b im Bereich der Rastausnehmungen 82b, 84b durch die Rastausnehmungen 82b, 84b seitlich offen ist. Figur 14 zeigt die Wischblattvorrichtung in einer Schnittdarstellung entlang einer Linie XIV-XIV in Fig. 10.

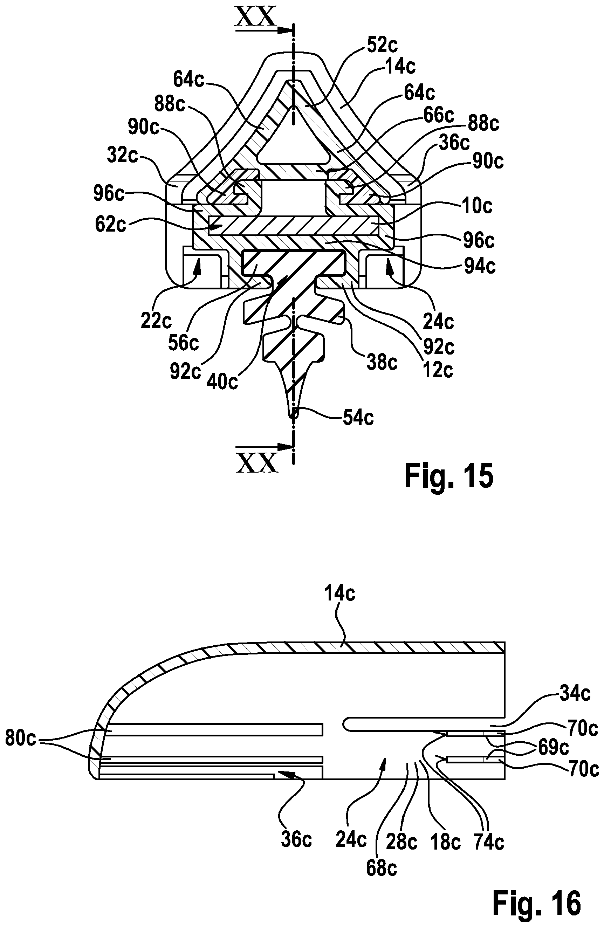

Figur 15 zeigt eine weitere Ausführungsform einer Wischblattvorrichtung. Ein Wischleistenträger 12c weist im Querschnitt betrachtet zumindest im Wesentlichen eine H-förmige Gestalt auf. Enden des Wischleistenträgers 12c sind im Querschnitt betrachtet zur Bildung von Aufnahmebereichen 40c, 62c und Halteleisten 88c umgelenkt. Der Aufnahmebereich 40c ist zur Aufnahme eines Trägerelements 56c einer Wischleiste 38c vorgesehen. Der Aufnahmebereich 62c ist zur Aufnahme einer Federleiste 10c vorgesehen. Die Halteleisten 88c sind zur Halterung einer Windleiteinheit 52c vorgesehen. An einem der Wischleiste 38c zugewandten Teil des H-förmigen Querschnitts des Wischleistenträgers 12c ist der Aufnahmebereich 40c ausgebildet. Der Wischleiste 38c zugewandte untere H-Schenkel 92c des Wischleistenträgers 12c sind im Querschnitt betrachtet zueinander hin umgebogen. In einem Endbereich sind die unteren H-Schenkel 92c des Wischleistenträgers 12a parallel zueinander und parallel zu einem H-Balken 94c ausgerichtet. Hierdurch ist ein in Richtung der Wischleiste 38c offener Hohlraum gebildet, in den das Trägerelement 56c der Wischleiste 38c formschlüssig passt. An einem der Windleiteinheit 52c zugewandten Teil des H-förmigen Querschnitts des Wischleistenträgers 12a sind der Aufnahmebereich 62c sowie die Halteleisten 88c ausgebildet. Die der Windleiteinheit 52c zugewandten oberen H-Schenkel 96c erstrecken sich vom H-Balken 94c aus zunächst beidseitig parallel zum H-Balken 94c nach außen und sind dann rechtwinklig in eine der Windleiteinheit 52c zugewandte Richtung umgebogen. Nach Überbrückung einer Distanz, welche der Dicke der Federleiste 10c entspricht, sind die oberen H-Schenkel 96c erneut rechtwinklig umgebogen und zwar zueinander hin. Nach Überbrückung einer weiteren Distanz sind die oberen H-Schenkel 96c erneut um 90° in einer von dem H-Balken 94c abgewandten Richtung umgelenkt. Nach erneuter Überwindung einer Distanz sind die oberen H-Schenkel 96c nach außen in eine von einem Flächenschwerpunkt des Querschnitts des Wischleistenträgers 12c weg weisende Richtung rechtwinklig umgebogen. Unmittelbar oberhalb des H-Balkens 94c ist ein in Richtung der Windleiteinheit 52c offener Hohlraum gebildet, in den die Federleiste 10c formschlüssig passt. Die umgelegten Enden der oberen H-Schenkel 96c bilden die Halteleisten 88c, die in korrespondierende Haltenuten 90c der Windleiteinheit 52c eingreifen.

Die Windleiteinheit 52c hat im Querschnitt betrachtet zumindest im Wesentlichen eine Form eines gleichschenkligen Dreiecks (vgl. Fig. 15). Dreieckschenkel 64c des Dreiecks sind über eine Basisseite 66c des Dreiecks verlängert und weisen dort die Haltenuten 90c auf. Die Windleiteinheit 52c besteht in einem Bereich der Haltenuten 90c aus einem härteren Kunststoff verglichen mit den übrigen Bereichen der Windleiteinheit 52c. Hierdurch kann ein sicherer Halt der Haltenuten 90c an den Halteleisten 88c des Wischleistenträgers 12c sichergestellt werden. Ferner kann ein Aufschieben der Windleiteinheit 52c auf den Wischleistenträger 12c bei einer Montage eines Wischblatts 46c vereinfacht werden. Die Dreieckschenkel 64c weisen zur Verbesserung ihrer Windleiteigenschaften eine von außen betrachtet leicht konkave Krümmung auf.

Figur 16 zeigt eine Schnittdarstellung einer Endabschlusseinheit 14c in einem demontierten Zustand. Die Endabschlusseinheit 14c weist Führungsleisten 80c auf. Die Führungsleisten 80c sind an einander gegenüberliegenden Seitenwänden der Endabschlusseinheit 14c angeformt und zu einer Führung der Federleiste 10c vorgesehen. An der Endabschlusseinheit 14c sind zwei als Rasthaken 26c, 28c ausgebildete Rastelemente 16c, 18c einstückig angeformt. Die Rasthaken 26c, 28c sind an einander gegenüberliegenden Seitenwänden der Endabschlusseinheit 14c angeformt. Die Rasthaken 26c, 28c umfassen jeweils einen Federsteg 68c und an den Federsteg 68c anschließende Rastkörper 69c. Die Rastkörper 69c sind dabei als flache, die Führungsleisten 80c fortsetzende Platten ausgebildet. Die Rastkörper 69c weisen jeweils eine, in einem montierten Zustand der Federleiste 10c zugewandte Auflaufschräge 70c auf. Auf einer von den Auflaufschrägen 70c abgewandten Richtung weisen die Rastkörper 69c jeweils eine Rastfläche 74c, 76c auf. Die Endabschlusseinheit 14c umfasst ferner zur Erhöhung einer Flexibilität der Rasthaken 26c, 28c jeweils eine zu den Rasthaken 26c, 28c benachbarte Ausnehmung 32c, 34c. Die Ausnehmungen 32c, 34c sind durch seitliche Einschnitte in die Endabschlusseinheit 14c gebildet.

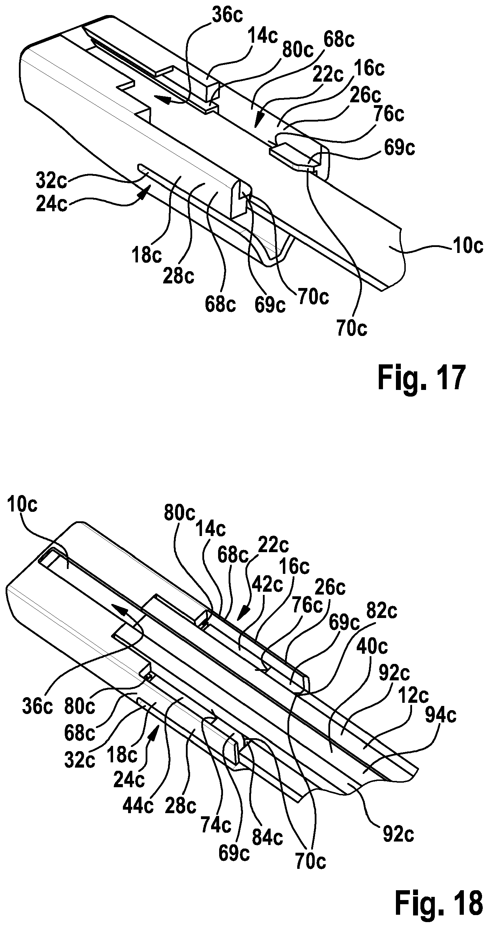

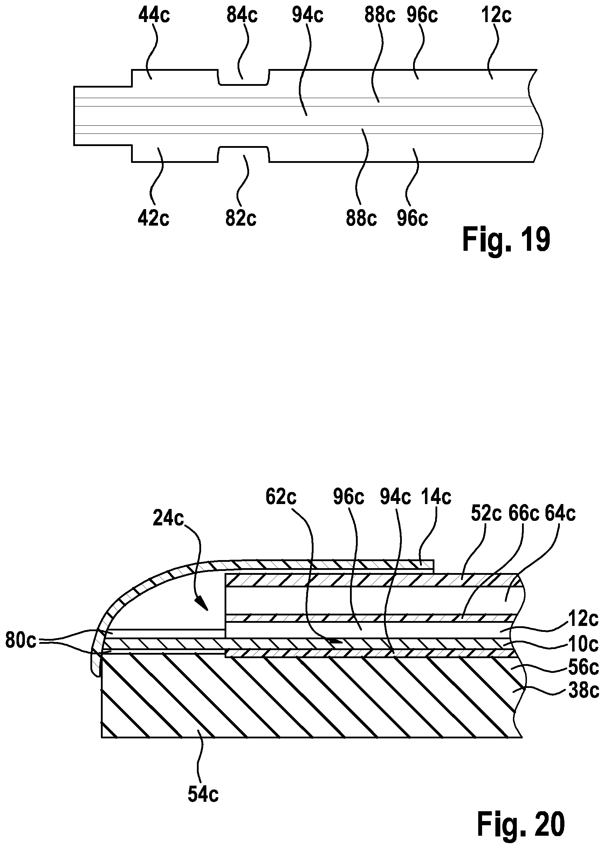

Figur 17 zeigt die Endabschlusseinheit 14c mit montierter Federleiste 10c in einer isometrischen Darstellung schräg von unten, wobei in Fig. 17 einer besseren Übersichtlichkeit halber auf eine Darstellung des Wischleistenträgers 12c, der Wischleiste 38c und der Windleiteinheit 52c verzichtet wurde. Die Federleiste 10c ist im vorliegenden Ausführungsbeispiel frei von jeglichen Rastelementen. Die Federleiste 10c wird bei einer Montage in die durch die Rastkörper 69c und die Führungsleisten 80c festgelegte Richtung eingeführt. Anschließend wird, wie in Fig. 18 gezeigt, der Wischleistenträger 12c auf die Federleiste 10c geschoben. Der Wischleistenträger 12c weist auch in diesem Ausführungsbeispiel zwei seitliche, mit den Rasthaken 26c, 28c zusammenwirkende Rastausnehmungen 82c, 84c auf (vgl. Fig. 19). Durch ein Aufschieben des Wischleistenträgers 12c gegen die Auflaufschrägen 70c der Rastkörper 69c werden diese elastisch aufgeweitet, so dass der Wischleistenträger 12c zwischen den Rastkörpern 69c Platz findet. Sobald die Rastkörper 69c oberhalb der Rastausnehmungen 82c, 84c angeordnet sind, schnappen die Rasthaken 26c, 28c in ihre Ausgangslage zurück. Bei hergestellter Rastverbindung liegen die Rastflächen 74c, 76c der Rastkörper 69c an korrespondierenden, die Rastausnehmungen 82c, 84c begrenzenden Flächen an und verhindern auf diese Weise ein Herausziehen des Wischleistenträgers 12c aus der Endabschlusseinheit 14c.

Figur 20 zeigt die Wischblattvorrichtung in einer Schnittdarstellung entlang einer Linie XX-XX in Fig. 15. Eine Position der Windleiteinheit 52c parallel zur Federleiste 10c ist durch einen Anschlag der Windleiteinheit 52c gegen eine Außenwand der Endabschlusseinheit 14c definiert. Die Endabschlusseinheit 14c ist in einem Innenbereich derart geformt, dass der Wischleistenträger 12c mit aufgesetzter Windleiteinheit 52c formschlüssig in die Endabschlusseinheit 14c passt (vgl. Fig. 15). Hierbei können insbesondere zusätzliche Abstandsstege zum Einsatz kommen, wie dies insbesondere in Fig. 15 und 20 durch eingezeichnete Abstände zwischen der Endabschlusseinheit 14c und dem Wischleistenträger 12c sowie zwischen der Endabschlusseinheit 14c und der Windleiteinheit 52c angedeutet ist. Die Abstandsstege können insbesondere dazu vorgesehen sein, Fertigungs- und/oder Montagetoleranzen auszugleichen.

Die Federleiste 10c ist im vorliegenden Ausführungsbeispiel in eine Richtung parallel zur Haupterstreckungsrichtung der Federleiste 10c beweglich mit der Endabschlusseinheit 14c verbunden. Eine Fixierung der Federleiste 10c in die Richtung parallel zur Haupterstreckungsrichtung erfolgt lediglich durch einen weiteren Anschlag an einem Adapter 48c und/oder an einer weiteren Endabschlusseinheit 14c an einem zweiten Ende der Federleiste 10c.

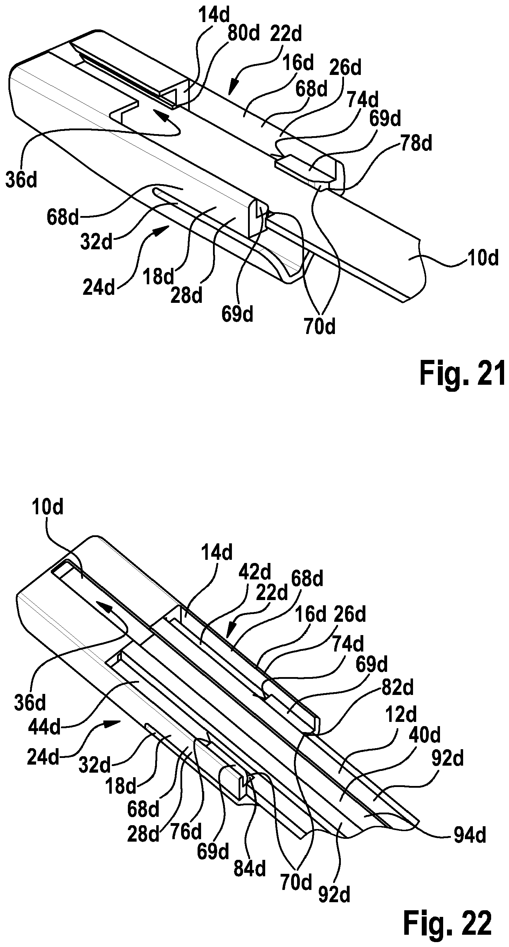

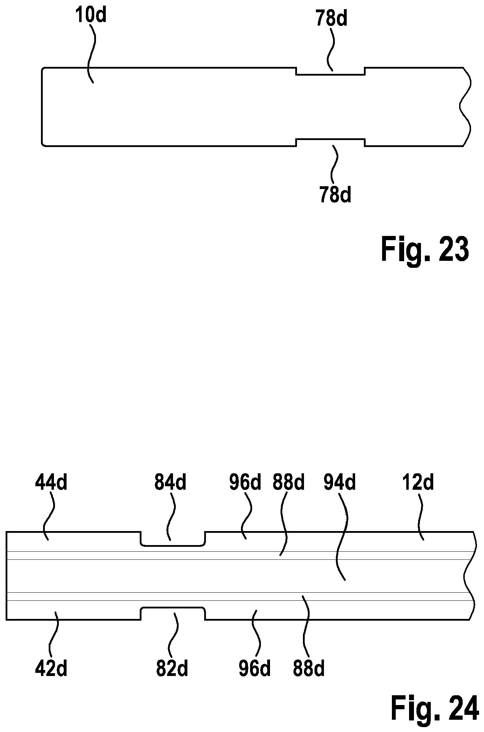

In Fig. 21 ist eine Abwandlung des vorherigen Ausführungsbeispiels gezeigt, bei der eine Federleiste 10d unmittelbar fest an einer Endabschlusseinheit 14d fixiert ist. Figur 21 zeigt die Endabschlusseinheit 14d mit montierter Federleiste 10d in einer isometrischen Schnittdarstellung schräg von unten, wobei einer besseren Übersichtlichkeit halber auf eine Darstellung eines Wischleistenträgers 12d, einer Wischleiste 38d und einer Windleiteinheit 52d verzichtet wurde. Im vorliegenden Ausführungsbeispiel sind an der Federleiste 10d seitliche Rastausnehmungen 78d vorgesehen (vgl. Fig. 23). Rastkörper 69d von Rasthaken 26d, 28d sind derart ausgebildet, dass die Rasthaken 26d, 28d schon bei einem Einschieben der Federleiste 10d elastisch verformt werden. Bei hergestellter Rastverbindung wirken Rastflächen 74d, 76d der Rastkörper 69d mit korrespondierenden, die Rastausnehmungen 78d begrenzenden Flächen der Federleiste 10d zusammen und verhindern so ein Herausziehen der Federleiste 10d aus der Endabschlusseinheit 14d. Eine Verrastung des Wischleistenträgers 12d mit der Endabschlusseinheit 14d erfolgt analog zum vorherigen Ausführungsbeispiel (vgl. Fig. 22 und 24).

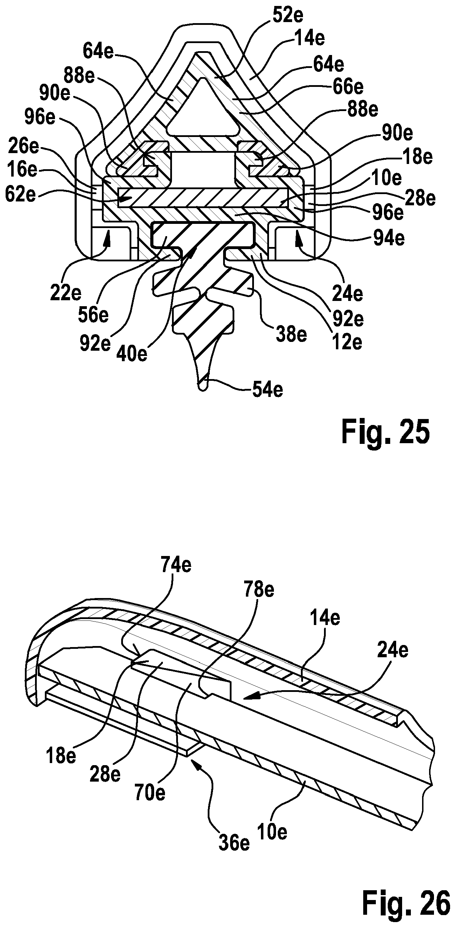

Figur 25 zeigt eine weitere erfindungsgemäße Wischblattvorrichtung. An zwei einander gegenüberliegenden Seitenwänden einer Endabschlusseinheit 14e sind zwei als Rasthaken 26e, 28e ausgebildete Rastelemente 16e, 18e angeformt. Die Rasthaken 26e, 28e haben in einem montierten Zustand in einer Betrachtung senkrecht zu einer Haupterstreckungsebene einer Federleiste 10e in ihrem Endbereich weitgehend eine Form rechtwinkliger Dreiecke (vgl. Fig. 26). Eine in der Betrachtung eine Hypotenuse der rechtwinkligen Dreiecke bildende Fläche stellt jeweils eine Auflaufschräge 70e dar. Eine in der Betrachtung eine kürzere Kathete der rechtwinkligen Dreiecke bildende Fläche stellt jeweils eine Rastfläche 74e, 76e dar. Die Federleiste 10e weist zwei seitliche, einander gegenüberliegende Rastausnehmungen 78e auf. Bei einer Montage der Federleiste 10e an der Endabschlusseinheit 14e werden die Rasthaken 26e, 28e durch eine Bewegung der Federleiste 10e entlang der Auflaufschrägen 70e elastisch verformt. Sobald die Rasthaken 26e, 28e oberhalb der Rastausnehmungen 78e angeordnet sind, kehren die Rasthaken 26e, 28e in ihre ursprüngliche Form zurück. Bei hergestellter Rastverbindung liegen die Rastflächen 74e, 76e der Rasthaken 26e, 28e an korrespondierenden, die Rastausnehmungen 78e begrenzenden Flächen an und verhindern auf diese Weise ein Herausziehen der Federleiste 10e aus der Endabschlusseinheit 14e. Im vorliegenden Ausführungsbeispiel ist ein Wischleistenträger 12e lediglich auf die Federleiste 10e aufgeschoben. Der Wischleistenträger 12e ist in eine Richtung parallel zur Haupterstreckungsrichtung der Federleiste 10e beweglich mit der Endabschlusseinheit 14e verbunden. Eine Fixierung des Wischleistenträgers 12e in die Richtung parallel zur Haupterstreckungsrichtung erfolgt lediglich durch einen weiteren Anschlag an einem Adapter 48e und/oder an einer weiteren Endabschlusseinheit 14e an einem zweiten Ende der Federleiste 10e.

Eine Position der Federleiste 10e innerhalb der Endabschlusseinheit 14e senkrecht zur Federleiste 10e ist durch von dem Wischleistenträger 12e und einer Windleiteinheit 52e gebildeten Anschlägen begrenzt. Die Endabschlusseinheit 14e ist in einem Innenbereich derart geformt, dass der Wischleistenträger 12e mit aufgesetzter Windleiteinheit 52e formschlüssig in die Endabschlusseinheit 14e passt (vgl. Fig. 25). Hierbei können insbesondere zusätzliche Abstandsstege zum Einsatz kommen, wie dies insbesondere in Fig. 25 durch eingezeichnete Abstände zwischen der Endabschlusseinheit 14e und dem Wischleistenträger 12e sowie zwischen der Endabschlusseinheit 14e und der Windleiteinheit 52e angedeutet ist. Die Abstandsstege können insbesondere dazu vorgesehen sein, Fertigungs-und/oder Montagetoleranzen auszugleichen.

## Patentansprüche

1. Wischblattvorrichtung mit zumindest einer Federleiste (10a-e), wenigstens einem Wischleistenträger (12a-e) und zumindest einer Endabschlusseinheit (14a-e), wobei die Endabschlusseinheit (14a-e) zur Befestigung der Federleiste (10a-e) und/oder des Wischleistenträgers (12a-e) wenigstens zwei Rastelemente (16a-e, 18a-e, 20a; 20b) umfasst, **dadurch gekennzeichnet, dass** die Federleiste (10a; 10b; 10d) und der Wischleistenträger (12a; 12b; 12d) mittels der Rastelemente (16a, 18a, 20a; 16b, 18b, 20b; 16d, 18d) an der Endabschlusseinheit (14a; 14b; 14d) fixiert sind.

2. Wischblattvorrichtung nach Anspruch 1, **dadurch gekennzeichnet, dass** die Rastelemente (16a-e, 18a-e, 20a; 20b) an der Endabschlusseinheit (14a-e) angeformt sind.

3. Wischblattvorrichtung nach einem der vorhergehenden Ansprüche, **dadurch gekennzeichnet, dass** zumindest ein Rastelement (16a-e, 18a-e) in wenigstens einem Seitenbereich (22a-e, 24a-e) der Endabschlusseinheit (14a-e) angeordnet ist.

4. Wischblattvorrichtung nach einem der vorhergehenden Ansprüche, **dadurch gekennzeichnet, dass** zumindest eines der Rastelemente (16a-e, 18a-e, 20a; 20b) als Rasthaken (26a-e, 28a-e, 30a; 30b) ausgebildet ist.

5. Wischblattvorrichtung nach Anspruch 4, **dadurch gekennzeichnet, dass** die Endabschlusseinheit (14c; 14d) zur Erhöhung einer Flexibilität der Rasthaken (26c, 28c; 26d, 28d) wenigstens eine Ausnehmung (32c, 34c; 32d, 34d) aufweist.

6. Wischblattvorrichtung nach einem der vorhergehenden Ansprüche, **dadurch gekennzeichnet, dass** die Endabschlusseinheit (14a-e) einen Aufnahmebereich (36a-e) für eine Wischleiste (38a-e) aufweist, der einen am Wischleistenträger (12a-e) angeordneten Aufnahmebereich (40a-e) für die Wischleiste (38a-e) in einem montierten Zustand fortsetzt.

7. Wischblattvorrichtung nach einem der vorhergehenden Ansprüche, **dadurch gekennzeichnet, dass** der Wischleistenträger (12a-d) wenigstens ein Rastelement (42a-d, 44a-d) zur Befestigung der Endabschlusseinheit (14a-d) aufweist.

8. Wischblatt (46a-e) mit einer Wischblattvorrichtung nach einem der vorhergehenden Ansprüche.

## Claims

1. Wiper blade device comprising at least one spring strip (10a-e), at least one wiper strip support (12a-e) and at least one end termination unit (14a-e), wherein the end termination unit (14a-e) comprises at least two latching elements (16a-e, 18a-e, 20a; 20b) for fastening the spring strip (10a-e) and/or the wiper strip support (12a-e), **characterized in that** the spring strip (10a; 10b; 10d) and the wiper strip support (12a; 12b; 12d) are fixed on the end termination unit (14a; 14b; 14d) by means of the latching elements (16a, 18a, 20a; 16b, 18b, 20b; 16d, 18d).

2. Wiper blade device according to Claim 1, **characterized in that** the latching elements (16a-e, 18a-e, 20a; 20b) are formed on the end termination unit (14a-e).

3. Wiper blade device according to either of the preceding claims, **characterized in that** at least one latching element (16a-e, 18a-e) is arranged in at least one side region (22a-e, 24a-e) of the end termination unit (14a-e).

4. Wiper blade device according to one of the preceding claims, **characterized in that** at least one of the latching elements (16a-e, 18a-e, 20a; 20b) is designed as a latching hook (26a-e, 28a-e, 30a; 30b).

5. Wiper blade device according to Claim 4, **characterized in that** the end termination unit (14c; 14d) has at least one aperture (32c, 34c; 32d, 34d) to increase flexibility of the latching hooks (26c, 28c; 26d, 28d).

6. Wiper blade device according to one of the preceding claims, **characterized in that** the end termination unit (14a-e) has a receiving region (36a-e) for a wiper strip (38a-e), which region, in an assembled state, continues a receiving region (40a-e), arranged on the wiper strip support (12a-e), for the wiper strip (38a-e).

7. Wiper blade device according to one of the preceding claims, **characterized in that** the wiper strip support (12a-d) has at least one latching element (42a-d, 44a-d) for fastening the end termination unit (14a-d).

8. Wiper blade (46a-e) having a wiper blade device according to one of the preceding claims.

## Revendications

1. Dispositif de balai d'essuie-glace comprenant au moins une baguette élastique (10a-e), au moins un support de raclette de balai d'essuie-glace (12a-e) et au moins une unité de terminaison (14a-e), l'unité de terminaison (14a-e) pour la fixation de la baguette élastique (10a-e) et/ou du support de raclette de balai d'essuie-glace (12a-e) comprenant au moins deux éléments d'encliquetage (16a-e, 18a-e, 20a ; 20b), **caractérisé en ce que** la baguette élastique (10a ; 10b ; 10d) et le support de raclette de balai d'essuie-glace (12a ; 12b ; 12d) sont fixés au moyen des éléments d'encliquetage (16a, 18a, 20a ; 16b, 18b, 20b ; 16d, 18d) à l'unité de terminaison (14a ; 14b ; 14d).

2. Dispositif de balai d'essuie-glace selon la revendication 1, **caractérisé en ce que** les éléments d'encliquetage (16a-e, 18a-e, 20a ; 20b) sont façonnés sur l'unité de terminaison (14a-e).

3. Dispositif de balai d'essuie-glace selon l'une quelconque des revendications précédentes, **caractérisé en ce qu'**au moins un élément d'encliquetage (16a-e, 18a-e) est disposé dans au moins une région latérale (22a-e, 24a-e) de l'unité de terminaison (14a-e).

4. Dispositif de balai d'essuie-glace selon l'une quelconque des revendications précédentes, **caractérisé en ce qu'**au moins l'un des éléments d'encliquetage (16a-e, 18a-e, 20a ; 20b) est réalisé sous forme de crochets d'encliquetage (26a-e, 28a-e, 30a ; 30b).

5. Dispositif de balai d'essuie-glace selon la revendication 4, **caractérisé en ce que** l'unité de terminaison (14c ; 14d) présente au moins un évidement (32c, 34c ; 32d, 34d) pour augmenter une flexibilité des crochets d'encliquetage (26c, 28c ; 26d, 28d).

6. Dispositif de balai d'essuie-glace selon l'une quelconque des revendications précédentes, **caractérisé en ce que** l'unité de terminaison (14a-e) présente une région de réception (36a-e) pour une raclette de balai d'essuie-glace (38a-e), qui, dans un état monté, prolonge une région de réception (40a-e) pour la raclette de balai d'essuie-glace (38a-e) disposée sur le support de raclette de balai d'essuie-glace (12a-e).

7. Dispositif de balai d'essuie-glace selon l'une quelconque des revendications précédentes, **caractérisé en ce que** le support de raclette de balai d'essuie-glace (12a-d) présente au moins un élément d'encliquetage (42a-d, 44a-d) pour la fixation de l'unité de terminaison (14a-d).

8. Balai d'essuie-glace (46a-e) comprenant un dispositif de balai d'essuie-glace selon l'une quelconque des revendications précédentes.
